# EUROPÄISCHE PATENTSCHRIFT

(11) **EP 2 803 610 B1**
(45) Veröffentlichungstag und Bekanntmachung des Hinweises auf die Patenterteilung: **08.11.2017**
(21) Anmeldenummer: 14164893.1
(22) Anmeldetag: 16.04.2014
(51) Int. Cl.: B65H 27/00, F16D 1/104, F16C 13/02, B26D 7/00, F16D 1/08, F16D 7/02

(54) **Führungsrad-Anordnung**
Guide wheel assembly
Système de roue de guidage

(30) Priorität: 14.05.2013 DE 202013102101 U
(43) Veröffentlichungstag der Anmeldung: 19.11.2014
(73) Patentinhaber: BHS Corrugated Maschinen- und Anlagenbau GmbH, 92729 Weiherhammer (DE)
(72) Erfinder: Grill, Martin, 92708 Mantel (DE); Hirmer, Michael, 92533 Wernberg-Köblitz (DE)
(74) Vertreter: Rau, Schneck & Hübner Patentanwälte Rechtsanwälte PartGmbB

(56) Entgegenhaltungen:
- DE-A1- 10 018 418
- GB-A- 1 205 097
- JP-A- 2011 162 283
- US-A- 5 142 758

## Beschreibung

Die Erfindung betrifft eine Führungsrad-Anordnung zum Führen flächiger, vorzugsweise flexibler, Materialelemente, insbesondere zum Führen von Materialbahnen oder Materialbögen, gemäß dem Anspruch 1. Die Materialbahnen sind beispielsweise Wellpappebahnen, während die Materialbögen vorzugsweise Wellpappebögen sind. Ferner richtet sich die Erfindung auf eine Führungsrad-Wellen-Anordnung mit mindestens einer derartigen Führungsrad-Anordnung. Ferner ist die Erfindung auf eine Querschneide-Vorrichtung zum Querschneiden von Materialbahnen gerichtet, die mindestens eine solche Führungsrad-Wellen-Anordnung umfasst.

Führungsrad-Anordnungen werden bei der Herstellung von Materialbahnen bzw. Materialbögen häufig eingesetzt. Bei Wartungs- und Instandsetzungsarbeiten sowie bei dem Zusammenbau von neuen Anlagen ist es oft erforderlich, dass die Führungsrad-Anordnungen auf Wellen aufgezogen bzw. von diesen entfernt werden. Dieses Aufziehen ist äußerst beschwerlich. Mindestens zwei Personen sind dafür im Allgemeinen erforderlich. Auch das Abziehen ist häufig nicht einfach.

Aus der JP 2011-162283 A ist eine Führungsrad-Anordnung bekannt, die insbesondere zum Fördern von Post oder dergleichen eingesetzt wird. Die Führungsrad-Anordnung umfasst ein Führungsrad mit einem inneren Ringteil und einem äußeren Ringteil, die über Stege miteinander verbunden sind. In das innere Ringteil ist ein hülsenförmiges Kernelement eingefügt, das beispielsweise aus Metall gebildet ist.

Die GB 1 205 097 A offenbart verschiedene Führungsrad-Anordnungen, die zum Fördern zerbrechlicher Teile Anwendung finden. Eine Führungsrad-Anordnung umfasst ein Grundrad, das wiederum ein äußeres Radteil hat. Das äußere Radteil ist aus Gummi gebildet und ist auf eine Einsatzbuchse gegossen. Es hat umfangsseitig eine Nut, die mit einem Steg einer Radabdeckung in Eingriff stehen kann. Das Grundrad ist über die Einsatzbuchse an einer Welle örtlich festlegbar.

Aus der DE 100 18 418 A1 ist ein rotierend antreibbarer Rotationskörper bekannt, der beispielsweise zum Bearbeiten und Fördern von Papierbahnen in Papier verarbeitenden Maschinen mittels als Schneidwalzen ausgebildeten Querschneidern sowie Förder- bzw. Umlenkwalzen verwendet wird. Der Rotationskörper hat einen rohrförmigen Trägerkörper, auf den eine wabenförmig strukturierte Zwischenschicht in Form eines Zylinderkörpers aufgebracht ist. Die eingelagerte Zwischenschicht ist mit einem äußeren Mantelkörper umwickelt.

Aus der US 5,142,758 sind unterschiedliche Räder zum Transport von Papierbahnen bekannt. Ein Rad umfasst eine Einsatzbuchse mit Vorsprüngen, die nach innen vorspringen. Die Einsatzbuchse ist mittels einer elastischen Umhüllung umhüllt. Eine Welle ist in die Einsatzbuchse einführbar.

Der Erfindung liegt daher die Aufgabe zugrunde, eine Führungsrad-Anordnung zu schaffen, die besonders einfach auswechselbar, das heißt montierbar und demontierbar, ist. Gleichzeitig soll die sichere Übertragung eines Drehmomentes von der Welle auf das Führungsrad bzw. auf die zu führenden Materialelemente gewährleistet sein. Ferner soll eine Führungsrad-Wellen-Anordnung bereitgestellt werden, deren mindestens eine Führungs rad-Anordnung besonders einfach auswechselbar ist. Eine entsprechende Querschneide-Vorrichtung soll ebenfalls geschaffen werden.

Diese Aufgabe wird erfindungsgemäß durch die in den unabhängigen Ansprüchen 1, 13 bzw. 15 angegebenen Merkmale gelöst. Der Kern der Erfindung liegt darin, dass in das innere Nabenteil eine Einsatzbuchse zentral eingesetzt ist. Die Einsatzbuchse erleichtert die Anordnung des Führungsrads auf der Welle. Ferner wird auch dessen Entfernung von der Welle erheblich vereinfacht.

Die Führungsrad-Anordnung sorgt beispielsweise für das Niederdrücken oder Tragen der Materialbahnen bzw. Materialbögen. Sie dient vorzugsweise zum Vorschieben der Materialbahnen oder Materialbögen in deren Transportrichtung.

Durch die drehfeste Verbindung zwischen dem inneren Nabenteil und dem äußeren Führungskranz ist ein Drehmoment von dem Nabenteil auf den Führungskranz übertragbar. Eine beschränkte bzw. geringfügige RelativDrehbewegung zwischen dem inneren Nabenteil und dem äußeren Führungskranz ist dabei beispielsweise möglich. Alternativ ist eine solche Relativ-Drehbewegung zwischen dem inneren Nabenteil und dem äußeren Führungskranz vollständig unterbunden.

Die Führungsrad-Anordnung hat eine Längsmittelachse, um welche die Führungsrad-Anordnung drehbar bzw. drehantreibbar ist. Das Nabenteil weist eine zentrale Aufnahmeöffnung auf, in der die Einsatzbuchse sitzt. Die Längsmittelachsen des Führungsrads und der Einsatzbuchse fallen zusammen und bilden gemeinsam die Längsmittelachse der Führungsrad-Anordnung.

Der Führungskranz hat außenseitig eine Führungsfläche bzw. Lauffläche zum Führen der flächigen Materialelemente. Die Führungsfläche liegt direkt oder indirekt an den zu führenden Materialelementen an. Es ist von Vorteil, wenn die Führungsfläche glatt oder profiliert ist.

Das Führungsrad ist vorzugsweise einteilig ausgeführt.

Es ist von Vorteil, wenn die drehfeste Verbindung zwischen dem Führungsrad und der Einsatzbuchse durch eine formschlüssige, kraftschlüssige und/oder stoffschlüssige Verbindung erzielt ist.

Die Einsatzbuchse ist im Querschnitt kreisringförmig ausgeführt. Sie ist in ihrem Außendurchmesser an das Nabenteil angepasst. In ihrem Innendurchmesser ist sie an die Welle angepasst.

Gemäß dem unabhängigen Anspruch 13 ist mindestens eine Führungsrad-Anordnung auf der Welle angeordnet. Es ist von Vorteil, wenn mehrere Führungsrad-Anordnungen auf der Welle nebeneinander vorhanden sind. Besonders bevorzugt haben die Führungsrad-Anordnungen einen identischen Abstand auf der Welle zueinander und stellen eine gemeinsame Führungsfläche bzw. Lauffläche bereit.

Es ist von Vorteil, wenn die mindestens eine Querschneide-Einheit nach dem unabhängigen Anspruch 15 mindestens ein Schneidmesser oder dergleichen umfasst.

Weitere vorteilhafte Ausgestaltungen der Erfindung sind in den Unteransprüchen angegeben.

Durch die Ausgestaltung nach Anspruch 2 sind das Führungsrad-Material und das Einsatzbuchsen-Material jeweils in Abhängigkeit der gewünschten bzw. erforderlichen Eigenschaften gezielt wählbar.

Gemäß dem Unteranspruch 2 ist bzw. umfasst das Führungsrad-Material Polyurethan. Dieses Material ist im Einsatz äußerst temperaturbeständig. Ferner ist es im Stande, mechanische Belastungen wie Druckkräfte bzw. Gewichtskräfte, besonders gut aufzunehmen. Es ist von Vorteil, wenn das Polyurethan hochvernetzt ist.

Gemäß dem Unteranspruch 2 ist das Einsatzbuchsen-Material Kunststoff, vorzugsweise Polyamid, bevorzugter Polycaprolactam (=PA6). Dieses Material hat gute Gleiteigenschaften und ermöglicht so ein besonders gutes Aufziehen der Führungsrad-Anordnung auf die Welle bzw. Abziehen. Es ist von Vorteil, wenn die Welle aus einem Metall-Material gebildet ist.

Durch die Ausgestaltung nach dem Unteranspruch 3 sind mechanische Belastungen äußerst gut von dem Führungsrad aufnehmbar. Durch die Federwirkung ist ein besonders schonender Transport möglich. Verschleiß an der Führungsrad-Anordnung wird wirksam verhindert.

Es ist von Vorteil, wenn die Federstege gemäß Unteranspruch 4 lamellenartig ausgeführt sind. Die Federstege begrenzen seitlich Öffnungen in dem Führungsrad, was die Federwirkung des Führungsrads verbessert.

Durch die geneigte Anordnung der Federstege gemäß Unteranspruch 4 ist die Federwirkung und Tragfähigkeit des Führungsrads besonders gut einstellbar.

Gemäß dem Unteranspruch 5 ist das Führungsrad durch einen Gießvorgang, also einen Urformvorgang, mit einer Gussform gebildet. Eine besonders kostengünstige Herstellung des Führungsrads ist so möglich. Verschiedene Gießverfahren sind anwendbar.

Gemäß dem Unteranspruch 6 ist das Führungsrad um die Einsatzbuchse gegossen. Die Einsatzbuchse ist somit mit dem Führungsrad-Material vergossen. Hierzu wird die vorgefertigte Einsatzbuchse in eine entsprechende Gussform einer Gießanlage gelegt und das Führungsrad-Material wird in die Gussform unter Bildung des Führungsrads gegossen. Die Einsatzbuchse ist also in das Führungsrad eingegossen. Es ist von Vorteil, wenn eine feste Verbindung zwischen der Einsatzbuchse und dem Führungsrad entsteht, die dauerhaft oder wieder lösbar ist.

Gemäß dem unabhängigen Anspruch 1 ist in der Einsatzbuchse umfangsseitig mindestens ein durchgängiges Nabenteil-Fenster ausgebildet. Dieses Nabenteil-Fenster ist beispielsweise durch Fräsen erzeugt. Durch den Eingriff des Nabenteils in das Nabenteil-Fenster ist eine besonders wirksame Drehmomentübertragung zwischen der Einsatzbuchse und dem Führungsrad möglich.

Gemäß dem Unteranspruch 8 durchsetzt das Nabenteil bzw. das Führungsrad das mindestens eine Nabenteil-Fenster in der Einsatzbuchse formschlüssig von außen und steht gegenüber dem mindestens einen Nabenteil-Fenster bzw. der Einsatzbuchse nach radial innen vor.

Es ist von Vorteil, wenn dass mindestens eine Nabenteil-Fenster in Richtung der Längsmittelachse der Einsatzbuchse länglich ausgeführt ist.

Die Ausgestaltungen nach den Unteransprüchen 10 und 11 ermöglichen eine äußerst gute Drehmomentübertragung.

Gemäß dem Unteranspruch 14 liegt der das mindestens eine Nabenteil-Fenster durchdringende Teil des Führungsrads umfangseitig an der Welle zur Übertragung eines Drehmoments von der Welle auf das Führungsrad bzw. die Führungsrad-Anordnung an, wobei vorzugsweise der das mindestens eine Nabenteil-Fenster durchdringende Teil des Führungsrads die Übertragung eines im Wesentlichen vorbestimmten maximalen Drehmoments erlaubt. Ab dem vorbestimmten Drehmoment tritt Schlupf zwischen der Welle und dem Führungsrad bzw. der Führungsrad-Anordnung auf.

Es ist von Vorteil, wenn das Führungsrad bzw. die Führungsrad-Anordnung nur mit dem das mindestens eine Nabenteil-Fenster bzw. die Einsatzbuchse durchdringenden Teil des Führungsrads umfangsseitig an der Welle zur Übertragung eines Drehmoments von der Welle auf das Führungsrad bzw. die Führungsrad-Anordnung anliegt. Günstigerweise ist so durch den das mindestens eine Nabenteil-Fenster durchdringenden Teil des Führungsrads ein Zwischen- bzw. Frei-Raum zwischen der Welle und der Einsatzbuchse bestimmt. Außer bei dem das mindestens eine Nabenteil-Fenster durchdringenden Teil des Führungsrads ist also vorzugsweise die Führungsrads-Anordnung bzw. das Führungsrad beabstandet zu der Welle angeordnet. Der das mindestens eine Nabenteil-Fenster durchdringende Teil des Führungsrads ist beispielsweise ein einzelner, zusammenhängender Teil oder durch einzelne voneinander beabstandete Teilstücke gebildet.

Nachfolgend wird unter Bezugnahme auf die beigefügte Zeichnung eine bevorzugte Ausführungsform der Erfindung beispielhaft beschrieben. Dabei zeigen:
- Fig. 1: eine stirnseitige Ansicht einer erfindungsgemäßen Führungsrad-Wellen-Anordnung,
- Fig. 2: einen Längsschnitt durch die in Fig. 1 dargestellte Führungsrad-Wellen-Anordnung gemäß der Schnittlinie II-II in Fig. 1,
- Fig. 3: einen Querschnitt durch die in den Fig. 1 und 2 dargestellte Führungsrad-Wellen-Anordnung,

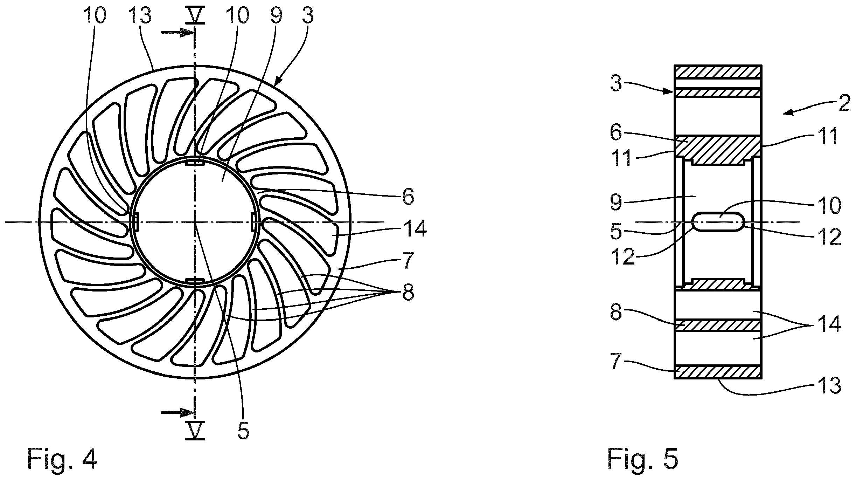

- Fig. 4: eine stirnseitige Ansicht eines Führungsrads der in den Fig. 1 bis 3 dargestellten Führungsrad-Wellen-Anordnung,
- Fig. 5: einen Längsschnitt durch das in Fig. 4 dargestellte Führungsrad entsprechend der Schnittlinie V-V in Fig. 4,

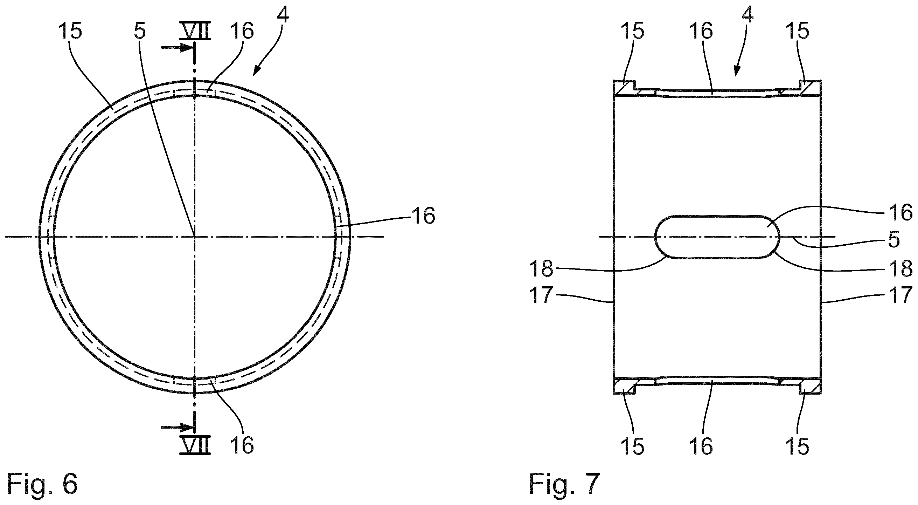

- Fig. 6: eine stirnseitige Ansicht einer Einsatzbuchse der in den Fig. 1 bis 3 dargestellten Führungsrad-Wellen-Anordnung, und
- Fig. 7: einen Längsschnitt durch die in Fig. 6 gezeigte Einsatzbuchse gemäß der Schnittlinie VII-VII in Fig. 6.

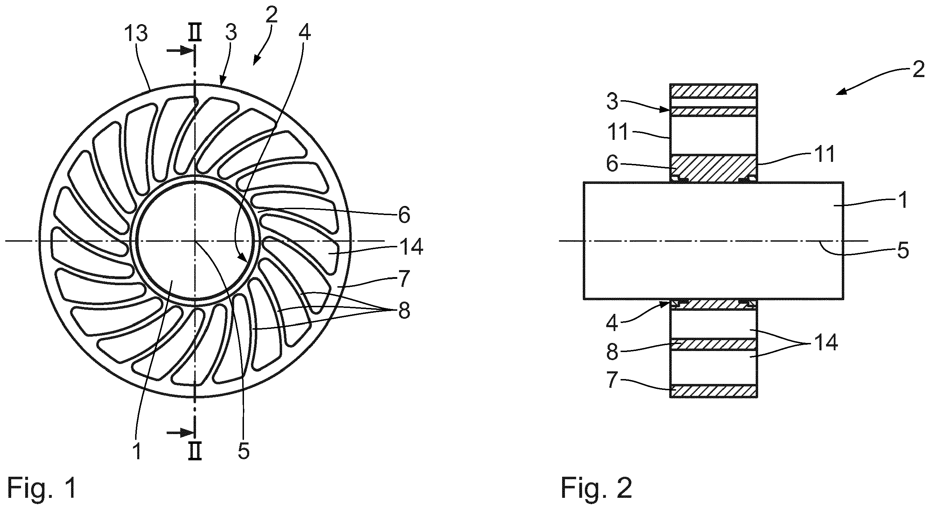

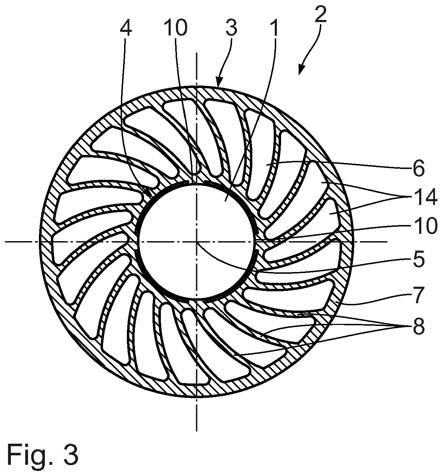

Eine in den Fig. 1 bis 3 in ihrer Gesamtheit dargestellte Führungsrad-Wellen-Anordnung umfasst eine Welle 1 und eine Führungsrad-Anordnung 2, die auf der Welle 1 sitzt und mit dieser in Drehmoment-übertragender Verbindung steht. Die Führungsrad-Anordnung 2 hat ein Führungsrad 3 und eine in das Führungsrad 3 mittig eingesetzte Einsatzbuchse 4. Die Führungsrad-Wellen-Anordnung hat eine Längsmittelachse 5, um welche diese drehbar bzw. drehantreibbar ist.

Das Führungsrad 3 wiederum hat ein radial inneres, zentrales Nabenteil 6 und einen radial äußeren Führungskranz 7, der mit dem Nabenteil 6 über Federstege 8 in drehfester und federnder Verbindung steht.

Das Nabenteil 6 begrenzt nach radial außen eine zylindrische Aufnahmeöffnung 9. Das Nabenteil 6 hat in die Aufnahmeöffnung 9 radial nach innen vorspringende Eingriffsansätze 10, die einen identischen angularen Abstand bezüglich der Längsmittelachse 5 bzw. in Umfangsrichtung des Nabenteils 6 zueinander aufweisen und identisch ausgeführt sind. Die Eingriffsansätze 10 sind federartig ausgeführt. Sie sind beabstandet zu den beiden einander gegenüberliegenden Stirnseiten 11 des Führungsrads 3 angeordnet. Die Eingriffsansätze 10 erstrecken sich in Richtung der Längsmittelachse 5 und haben abgerundete, einander gegenüberliegende Längsenden 12. Bei dieser Ausführungsform sind vier Eingriffsansätze 10 vorgesehen. Eine andere Anzahl ist alternativ möglich.

Der Führungskranz 7, der kreiszylindrisch ausgeführt ist, hat eine radial äußere Führungsfläche 13, die auch als Lauffläche bezeichnet werden kann.

Wie bereits erwähnt, ist der Führungskranz 7 über Federstege 8 mit dem radial inneren Nabenteil 6 drehfest verbunden. Die Federstege 8 sind in Umfangsrichtung des Führungsrads 3 geneigt, so dass diese auch gegenüber der Radialen schräg verlaufen. Die Federstege 8 begrenzen in Umfangsrichtung des Führungsrads 3 Federkammern 14. Sie können gerade oder gekrümmt verlaufen. Die Federkammern 14 erweitern sich von dem Nabenteil 6 in Richtung auf den Führungskranz 7. Die Federkammern 14 sind nach radial innen durch das Nabenteil 6 und nach radial außen durch den Führungskranz 7 begrenzt. Eine andere Anordnung der Federstege 8 bzw. der Federkammern 14 ist alternativ möglich.

Die Einsatzbuchse 4 hat stirnseitig jeweils einen nach radial außen vorspringenden Ringsteg 15. Die Ringstege 15 greifen in entsprechende ringförmige Aussparungen in dem Führungsrad 3 formschlüssig ein, was für eine axiale Fixierung zwischen der Einsatzbuchse 4 und dem Nabenteil 6 in Richtung der Längsmittelachse 5 sorgt.

In der Einsatzbuchse 4 sind längliche Nabenteil-Fenster 16 vorgesehen, die die Einsatzbuchse 4 in radialer Richtung vollständig durchdringen bzw. durchsetzen. Die Anzahl, Gestalt und Anordnung der Nabenteil-Fenster 16 ist an die Anzahl, Gestalt und Anordnung der Eingriffsansätze 10 angepasst. Es sind hier also auch vier Nabenteil-Fenster 16 vorhanden. Die Nabenteil-Fenster 16 sind beabstandet zu den Stirnseiten 17 der Einsatzbuchse 4 angeordnet und erstrecken sich jeweils in Richtung der Längsmittelachse 5. Sie haben abgerundete Längsenden 18. Die radiale Dicke der Einsatzbuchse 4 im Bereich der Nabenteil-Fenster 16 ist geringer als die radiale Höhe der Eingriffsansätze 10. Die Einsatzbuchse 4 hat zwischen den Ringstegen 16 eine im Wesentlichen konstante radiale Dicke.

Die Eingriffsansätze 10 greifen von radial außen formschlüssig in die Nabenteil-Fenster 16 ein und durchdringen diese vollständig. Die Eingriffsansätze 10 stehen in radialer Richtung nach innen gegenüber den Nabenteil-Fenstern 16 bzw. der Einsatzbuchse 4 vor. Vorzugsweise stehen die Eingriffsansätze 10 in radialer Richtung nach innen gegenüber den Nabenteil-Fenstern 16 bzw. der Einsatzbuchse 4 zwischen 0,1 mm und 2 mm, bevorzugter zwischen 0,2 mm und 1 mm, vor, sodass auch ein entsprechender Zwischen- bzw. Frei-Raum mit einer solchen radialen Höhe zwischen der Welle 1 und der Einsatzbuchse 4 erzeugbar ist. Durch die formschlüssige Verbindung zwischen den Eingriffsansätzen 10 und den Nabenteil-Fenstern 16 erfolgt einerseits eine axiale Fixierung in Richtung der Längsmittelachse 5 zwischen dem Führungsrad 3 und der Einsatzbuchse 4 und andererseits eine Fixierung in Umfangsrichtung der Führungsrad-Anordnung zwischen dem Führungsrad 3 und der Einsatzbuchse 4, was auch eine Drehmomentübertragung zwischen der Einsatzbuchse 4 und dem Führungsrad 3 erlaubt. Die Verbindung zwischen dem Führungsrad 3 und der Einsatzbuchse 4 ist quasi eine Nut-Feder-Verbindung.

Im montierten Zustand der Führungsrad-Anordnung 2 auf der Welle 1 liegen die Eingriffsansätze 10 umfangsseitig außen an der Welle 1 an und sorgen so für eine Drehmomentübertragung zwischen der Welle 1 und der Führungsrad-Anordnung 2. Durch die in radialer Richtung nach innen gegenüber den Nabenteil-Fenstern 16 bzw. der Einsatzbuchse 4 vorstehenden Eingriffsansätze 10 liegt zwischen der Welle 1 und der Einsatzbuchse 4 ein im Wesentlichen ringförmiger Zwischen- bzw. Frei-Raum mit einer radialen Höhe zwischen 0,1 mm und 2 mm, bevorzugter zwischen 0,2 mm und 1 mm, vor. Ab einem Schwellen-Drehmoment ist eine Relativ-Drehbewegung zwischen der Welle 1 und der Führungsrad-Anordnung 2 möglich. Die Eingriffsansätze 10 erlauben die Übertragung eines im Wesentlichen vorbestimmten maximalen Drehmoments.

Die Führungsrad-Wellen-Anordnung ist bei dem Einzug und/oder Auszug einer Querschneide-Vorrichtung (nicht dargestellt) einsetzbar. Diese führt dann den Querschneide-Vorgang. Nach der Querschneide-Einheit kann die Führungsrad-Wellen-Anordnung beispielsweise eingesetzt werden, um den notwendigen Abstand zwischen den einzelnen Materialbögen zu erzeugen.

## Patentansprüche

1. Führungsrad-Anordnung zum Führen flächiger Materialelemente, insbesondere zum Führen von Materialbahnen oder Materialbögen, umfassend
a) ein Führungsrad (3) mit
i) einem inneren, zentralen Nabenteil (6), und
ii) einem mit dem inneren Nabenteil (6) in drehfester Verbindung stehenden, äußeren Führungskranz (7) zum Führen der flächigen Materialelemente, und
b) eine in das innere Nabenteil (6) konzentrisch eingesetzte Einsatzbuchse (4) zur Anordnung auf einer Welle (1), wobei die Einsatzbuchse (4) mit dem Führungsrad (3) in drehfester Verbindung steht,
**dadurch gekennzeichnet, dass**
c) in der Einsatzbuchse (4) umfangseitig mindestens ein Nabenteil-Fenster (16) ausgebildet ist, in das das Nabenteil (6) von außen eingreift.

2. Führungsrad-Anordnung nach Anspruch 1, **dadurch gekennzeichnet, dass** das Führungsrad (3) aus einem Führungsrad-Material und die Einsatzbuchse (4) aus einem Einsatzbuchsen-Material gebildet ist, wobei das Führungsrad-Material und das Einsatzbuchsen-Material voneinander verschieden sind, wobei vorzugsweise das Führungsrad-Material Polyurethan ist/umfasst, wobei vorzugsweise das Einsatzbuchsen-Material Kunststoff, vorzugsweise Polyamid, bevorzugter Polycaprolactam (=PA6), ist/umfasst.

3. Führungsrad-Anordnung nach einem der vorherigen Ansprüche, **dadurch gekennzeichnet, dass** der äußere Führungskranz (7) federnd mit dem inneren Nabenteil (6) verbunden ist.

4. Führungsrad-Anordnung nach Anspruch 3, **dadurch gekennzeichnet, dass** der äußere Führungskranz (7) und das innere Nabenteil (6) über federnd ausgebildete Federstege (8) drehfest miteinander verbunden sind, wobei vorzugsweise die Federstege (8) in Umfangsrichtung des Führungskranzes (7) und/oder des Nabenteils (6) geneigt sind.

5. Führungsrad-Anordnung nach einem der vorherigen Ansprüche, **dadurch gekennzeichnet, dass** das Führungsrad (3) ein gegossenes Gussteil ist.

6. Führungsrad-Anordnung nach Anspruch 5, **dadurch gekennzeichnet, dass** das Führungsrad (3) um die Einsatzbuchse (4) gegossen ist.

7. Führungsrad-Anordnung nach einem der vorherigen Ansprüche, **dadurch gekennzeichnet, dass** das Nabenteil (6) von außen formschlüssig in das mindestens eine Nabenteil-Fenster (16) eingreift.

8. Führungsrad-Anordnung nach Anspruch 7, **dadurch gekennzeichnet, dass** das Nabenteil (6) das mindestens eine Nabenteil-Fenster (16) formschlüssig von außen durchsetzt und gegenüber diesem nach radial innen zur Anlage an der Welle (1) vorsteht.

9. Führungs-Anordnung nach Anspruch 8, **dadurch gekennzeichnet, dass** das Nabenteil (6) gegenüber dem mindestens einen Nabenteil-Fenster (16) nach radial innen zwischen 0,1 mm und 2 mm, bevorzugter zwischen 0,2 mm und 1 mm, vorsteht.

10. Führungsrad-Anordnung nach einem der Ansprüche 7 bis 9, **dadurch gekennzeichnet, dass** das mindestens eine Nabenteil-Fenster (16) in seiner Umfangsrichtung vollständig geschlossen ist.

11. Führungsrad-Anordnung nach einem der Ansprüche 7 bis 10, **dadurch gekennzeichnet, dass** mehrere der Nabenteil-Fenster (16) vorgesehen sind, wobei die Nabenteil-Fenster (16) einen identischen Abstand in Umfangsrichtung der Einsatzbuchse (4) zueinander haben.

12. Führungsrad-Anordnung nach einem der vorherigen Ansprüche, **dadurch gekennzeichnet, dass** die Einsatzbuchse (4) stirnseitig jeweils einen nach radial außen vorspringenden Ringsteg (15) aufweist, wobei die Ringstege (15) in entsprechende ringförmige Aussparungen in dem Führungsrad (3) formschlüssig eingreifen.

13. Führungsrad-Wellen-Anordnung, umfassend
a) eine Welle (1), und
b) mindestens eine auf der Welle (1) angeordnete Führungsrad-Anordnung (2) nach einem der vorherigen Ansprüche,
i) wobei die Einsatzbuchse (4) benachbart zu der Welle (1) angeordnet ist,
ii) wobei die Einsatzbuchse (4) zwischen der Welle (1) und dem Führungsrad (3) angeordnet ist

14. Führungsrad-Wellen-Anordnung nach Anspruch 13, **dadurch gekennzeichnet, dass** der das mindestens eine Nabenteil-Fenster (16) durchdringende Teil (10) des Führungsrads (3) umfangseitig an der Welle (1) zur Übertragung eines Drehmoments von der Welle (1) auf das Führungsrad (3) anliegt, wobei vorzugsweise der das mindestens eine Nabenteil-Fenster (16) durchdringende Teil (10) des Führungsrads (3) die Übertragung eines im Wesentlichen vorbestimmten maximalen Drehmoments erlaubt.

15. Querschneide-Vorrichtung zum Querschneiden von Materialbahnen, umfassend
a) mindestens eine Querschneide-Einheit, und
b) mindestens eine Führungsrad-Wellen-Anordnung nach Anspruch 13 oder 14, die stromaufwärts und/oder stromabwärts zu der Querschneide-Einheit angeordnet ist.

## Claims

1. Guide wheel arrangement for guiding two-dimensional material elements, in particular for guiding material webs or material sheets, comprising
a) a guide wheel (3) comprising
i) an inner central hub section (6), and
ii) an outer guide ring (7), which is non-rotationally connected to the inner hub section (6), for guiding the two-dimensional material elements, and
b) an insert bushing (4) to be arranged on a shaft (1), which is concentrically inserted into the inner hub section (6), wherein the insert bushing (4) is non-rotationally connected to the guide wheel (3),
**characterised in that**
c) at least one hub section window (16) is formed in the periphery of the insert bushing (4), with the hub section (6) engaging said hub section window (16) from outside.

2. Guide wheel arrangement according to claim 1, **characterised in that** the guide wheel (3) is made of a guide wheel material and the insert bushing (4) is made of an insert bushing material, wherein the guide wheel material and the insert bushing material are different from each other, wherein the guide wheel material preferably is/comprises polyurethane, wherein the insert bushing material is/comprises plastics, preferably polyamide, more preferably polycaprolactam (=PA6).

3. Guide wheel arrangement according to any one of the preceding claims, **characterised in that** the outer guide ring (7) is resiliently connected to the inner hub section (6).

4. Guide wheel arrangement according to claim 3, **characterised in that** the outer guide ring (7) and the inner hub section (6) are interconnected in a non-rotational manner by resilient spring webs (8), wherein the spring webs (8) are preferably inclined in the peripheral direction of the guide ring (7) and/or the hub section (6).

5. Guide wheel arrangement according to any one of the preceding claims, **characterised in that** the guide wheel (3) is a cast part.

6. Guide wheel arrangement according to claim 5, **characterized in that** the guide wheel (3) is cast around the insert bushing (4).

7. Guide wheel arrangement according to any one of the preceding claims, **characterised in that** the hub section (6) engages the at least one hub section window (16) from outside in such a way that a positive fit is formed.

8. Guide wheel arrangement according to claim 7, **characterised in that** the hub section (6) passes through the at least one hub section window (16) from outside such that a positive fit is formed and protrudes relative to the hub section window (16) in a radially inward direction so as to abut against the shaft (1).

9. Guide wheel arrangement according to claim 8, **characterised in that** the hub section (6) protrudes relative to the at least hub section window (16) in a radially inward direction by an amount of between 0.1 mm and 2 mm, more preferably between 0.2 mm and 1 mm.

10. Guide wheel arrangement according to any one of claims 7 to 9, **characterised in that** the at least one hub section window (16) is completely closed in its peripheral direction.

11. Guide wheel arrangement according to any one of claims 7 to 10, **characterised in that** more than one of the hub section windows (16) are provided, wherein the hub section windows (16) have an identical distance from each other in the peripheral direction of the insert bushing (4).

12. Guide wheel arrangement according to any one of the preceding claims, **characterised in that** the front ends of the insert bushing (4) are each provided with an annular web (15) protruding in a radially outward direction, wherein the annular webs (15) engage corresponding annular recesses in the guide wheel (3) in such a way that a positive fit is formed.

13. Guide wheel-shaft arrangement comprising
a) a shaft (1), and
b) at least one guide wheel arrangement (2) according to any one of the preceding claims, which is arranged on the shaft (1),
i) wherein the insert bushing (4) is arranged adjacent to the shaft (1);
ii) wherein the insert bushing (4) is arranged between the shaft (1) and the guide wheel (3).

14. Guide wheel-shaft arrangement according to claim 13, **characterised in that** the portion (10) of the guide wheel (3) passing through the at least one hub section window (16) abuts against the periphery of the shaft (1) for transmission of a torque from the shaft (1) to the guide wheel (3), wherein the portion (10) of the guide wheel (3) passing through the at least one hub section window (16) preferably allows the transmission of a substantially predefined maximum torque.

15. Cross-cutting device for the cross-cutting of material webs, comprising
a) at least one cross-cutting unit, and
b) at least one guide wheel-shaft arrangement according to claim 13 or 14, which is arranged upstream and/or downstream of the cross-cutting unit.

## Revendications

1. Agencement de roue de guidage pour guider de grands éléments de matériau, en particulier pour guider des bandes de matériau ou des feuilles de matériau, comprenant
a) une roue de guidage (3) comprenant
i) un moyeu intérieur central (6), et
ii) une couronne de guidage (7) extérieure, reliée de manière fixe au moyeu intérieur (6), pour guider de grands éléments de matériau, et
b) une douille d'insertion (4) insérée de manière concentrique dans le moyeu intérieur (6) pour un agencement sur un arbre (1), la douille d'insertion (4) étant reliée de manière fixe à la roue de guidage (3),
**caractérisé en ce que**
c) sur la périphérie de la douille d'insertion (4), il se forme au moins un trou de moyeu (16) dans lequel le moyeu (6) est inséré par l'extérieur.

2. Agencement de roue de guidage selon la revendication 1, **caractérisé en ce que** la roue de guidage (3) est composée d'un matériau de roue de guidage et la douille d'insertion (4) est composée d'un matériau de douille d'insertion, dans lequel le matériau de roue de guidage et le matériau de douille d'insertion sont déplacés l'un par rapport à l'autre, dans lequel le matériau de roue de guidage est, de préférence, du polyuréthane ou en contient et le matériau de douille d'insertion est, de préférence, du plastique, de préférence du polyamide, idéalement du polycaprolactame (=PA6) ou en contient.

3. Agencement de roue de guidage selon l'une quelconque des revendications précédentes, **caractérisé en ce que** la couronne de guidage (7) extérieure est reliée de manière élastique au moyeu intérieur (6).

4. Agencement de roue de guidage selon la revendication 3, **caractérisé en ce que** la couronne de guidage (7) et le moyeu intérieur (6) sont reliés l'un à l'autre de manière fixe par des entretoises élastiques à ressort (8), les entretoises élastiques (8) étant de préférence inclinées dans le sens de la périphérie de la couronne de guidage (7) et/ou du moyeu (6).

5. Agencement de roue de guidage selon l'une quelconque des revendications précédentes, **caractérisé en ce que** la roue de guidage (3) est une pièce moulée.

6. Agencement de roue de guidage selon la revendication 5, **caractérisé en ce que** la roue de guidage (3) est moulée autour de la douille d'insertion (4).

7. Agencement de roue de guidage selon l'une quelconque des revendications précédentes, **caractérisé en ce que** le moyeu (6) s'insère par l'extérieur mécaniquement dans le au moins un trou de moyeu (16).

8. Agencement de roue de guidage selon la revendication 7, **caractérisé en ce que** le moyeu (6) s'applique par l'extérieur mécaniquement dans le au moins un trou de moyeu (16) et fait saillie par rapport à ce dernier dans un sens radialement intérieur à l'agencement sur l'arbre (1).

9. Agencement de roue de guidage selon la revendication 8, **caractérisé en ce que** le moyeu (6) fait saillie par rapport au au moins un trou de moyeu (16) dans un sens radialement intérieur entre 0,1 mm et 2 mm, de préférence entre 0,2 mm et 1 mm.

10. Agencement de roue de guidage selon l'une quelconque des revendications 7 à 9, **caractérisé en ce que** le au moins un trou de moyeu (16) est entièrement fermé dans le sens de sa périphérie.

11. Agencement de roue de guidage selon l'une quelconque des revendications 7 à 10, **caractérisé en ce que** plusieurs des trous de moyeu (16) sont prévus, les trous de moyeu (16) présentant une distance identique les uns par rapport aux autres dans le sens de la périphérie de la douille d'insertion (4).

12. Agencement de roue de guidage selon l'une quelconque des revendications précédentes, **caractérisé en ce que** la douille d'insertion (4) présente respectivement, sur sa face avant, un talon circulaire saillant dans un sens radialement extérieur, les talons circulaires (15) s'insérant mécaniquement dans les encoches annulaires correspondantes de la roue de guidage (3).

13. Agencement d'arbres de roue de guidage, comprenant
a) un arbre (1), et
b) au moins un agencement de roue de guidage (2) placé sur l'arbre (1) selon l'une quelconque des revendications précédentes,
i) dans lequel la douille d'insertion (4) est placée à côté de l'arbre (1)
ii) dans lequel la douille d'insertion (4) est placée entre l'arbre (1) et la roue de guidage (3).

14. Agencement d'arbres de roue de guidage selon la revendication 13, **caractérisé en ce que** la partie (10) de la roue de guidage (3) traversant le au moins un trou de moyeu (16) est appliquée, sur la périphérie, sur l'arbre (1) pour transmettre un couple de rotation de l'arbre (1) sur la roue de guidage (3), la partie (10) de la roue de guidage (3) traversant le au moins un trou de moyeu (16) assurant de préférence la transmission d'un couple de rotation maximal essentiellement prédéterminé.

15. Dispositif de découpe transversale pour découper de manière transversale les bandes de matériau, comprenant
a) au moins une unité de découpe transversale, et
b) au moins un agencement d'arbres de roue de guidage selon la revendication 13 ou 14, placé en amont et/ou en aval de l'unité de découpe transversale.
